# EUROPEAN PATENT APPLICATION

(11) **EP 4 786 284 A1**
(43) Date of publication of application: **05.08.2026**
(21) Application number: 24870865.3
(22) Date of filing: 26.09.2024
(51) Int. Cl.: B60R 16/03, B60R 16/023, G05B 23/02, G06F 11/00

(54) **CONTROL CIRCUIT, CONTROL SYSTEM AND CONTROL METHOD FOR LIMP HOME FUNCTION OF VEHICLE**

(30) Priority: 28.09.2023 CN 202311291803
(71) Applicant: Valeo Schalter und Sensoren GmbH, 74321 Bietigheim-Bissingen (DE)
(72) Inventor: ZHANG, Ke, Shenzhen, Guangdong 518128 (CN); LIU, Chun, Shenzhen, Guangdong 518128 (CN); WANG, Ning, Shenzhen, Guangdong 518128 (CN); NIE, Junjie, Shenzhen, Guangdong 518128 (CN)
(74) Representative: Valeo Schalter und Sensoren
(86) International application number: PCT/CN2024/121396
(87) International publication number: WO 2025/067325

(57) **Abstract**

The present disclosure relates to a control circuit for a limp home function of a vehicle. The control circuit comprises: a first port, which is configured to be used for receiving a failure output signal for indicating the execution of a limp home function; a drive module, which is configured to be used for driving a load of a vehicle that can execute the limp home function; a power supply module, which is configured to be used for providing a power supply signal for the drive module; and a second port, which is configured to be used for outputting a drive signal for driving the load. The power supply module is configured to provide the power supply signal by means of delaying for a predetermined time period, wherein the predetermined time period is determined on the basis of response parameters of a microcontroller unit and a functional safety control unit of the vehicle during the startup of the vehicle. The present disclosure further relates to a control system and control method for a limp home function of a vehicle, and a computer-readable storage medium.

## Description

### Technical field

The present invention relates to the technical field of electronic control of vehicles, and in particular to a control circuit, a control system, and a control method for a limp-home function of a vehicle, and a computer-readable storage medium.

### Background art

The limp-home function is a critical and important function in vehicle body control. During driving of the vehicle, in a case where the microcontroller unit (Microcontroller Unit, MCU) suddenly fails and causes the system to be unable to operate normally, the limp-home function enables related loads that can directly control functional safety, for example, vehicle lights, vehicle doors, wipers, and the like, to operate normally, ensuring the vehicle can safely drive home or to a nearby repair shop in a load-effective way.

Therefore, control design for the limp-home function of the vehicle is needed. In current mainstream design solutions, a system basis chip (System Basis Chip, SBC) is often used to implement this. The SBC is an integrated functional chip that integrates a power supply unit, a monitoring unit, a communication unit, a signal output unit, and the like according to user needs. In an SBC with built-in functional safety functions, for example, the operating status of the MCU is monitored through a watchdog unit of the SBC, and when the MCU hardware or software operation has a failure and causes a watchdog feed signal to be missing, the SBC outputs a fault output signal (Failure Output, FO), so as to activate a load capable of executing the limp-home function.

However, in the actual operation process of the vehicle, when the vehicle starts, because the initialization completion time of the MCU is later than the initialization completion time of the SBC, the SBC, for example, cannot receive the watchdog feed signal in time before the MCU initialization is completed and thus outputs a fault output signal, thereby causing abnormal activation of the related loads, and only after the MCU initialization is completed and the watchdog feed signal is normally output does the abnormal activation of the relevant loads stop, and as an example, short-term activation of vehicle lights and wipers when starting the vehicle is such a case.

In addition, in a case where the MCU actually has a failure, as described above, the SBC will continuously output the fault output signal and cause long-term activation of the related loads, and such long-term activation can stop only after the whole vehicle is powered off, which is not desired, for example, in a case where the vehicle does not need the function of the related loads or in a case where vehicle battery power is tight.

### Summary of the invention

In order to solve the above problems, the present disclosure proposes a control circuit, a control system, and a control method for a limp-home function of a vehicle, such that on one hand abnormal activation of the load can be avoided in a case where initialization of the microcontroller is not completed, and on the other hand manual deactivation of the loads can be implemented when there is a failure of the microcontroller, and is particularly applicable to a motor vehicle domain controller (Domain Controller), a zonal controller (Zonal Controller), and the like.

Embodiments of the present disclosure provide a control circuit for a limp-home function of a vehicle, including:
- a first port, configured to receive a fault output signal, the fault output signal instructing execution of the limp-home function;
- a drive module, configured to drive a load of the vehicle capable of executing the limp-home function;
- a power supply module, configured to provide a power supply signal to the drive module;
- a second port, configured to output a drive signal for driving the load,

wherein the drive module has a first input terminal connected to the power supply module, a second input terminal connected to the first port, and an output terminal connected to the second port, and the power supply module is configured to provide the power supply signal in a manner of delaying a predetermined time period, such that the fault output signal is masked within the predetermined time period, thereby making it impossible to drive the load within the predetermined time period,
wherein the predetermined time period is determined based on response parameters of a microcontroller unit and a functional safety control unit of the vehicle during the start-up process of the vehicle, the functional safety control unit being configured to monitor the operating status of the microcontroller unit and, in the case of detecting an abnormality in the operating status, output the fault output signal.

According to embodiments of the present disclosure, the response parameters are initialization completion time, and the predetermined time period is determined based on the difference between the initialization completion time of the microcontroller unit and the initialization completion time of the functional safety control unit.

According to embodiments of the present disclosure, the predetermined time period is between 100 ms and 200 ms, or other time lengths.

According to embodiments of the present disclosure, in a case where the drive module continuously receives the fault output signal, the power supply module can be manually disabled, wherein the continuously receiving the fault output signal includes receiving the fault output signal for a period of time longer than the predetermined time period.

According to embodiments of the present disclosure, the power supply module can be controlled in a hardware and/or software manner.

According to embodiments of the present disclosure, the power supply module has a power supply and a switching device, and the switching device can be controlled in a hardware and/or software manner.

According to embodiments of the present disclosure, the power supply module being capable of being manually disabled includes being manually disabled by means of a switching device in a hardware or software form in the power supply module.

According to embodiments of the present disclosure, the drive module includes a transistor and/or a field-effect transistor.

According to embodiments of the present disclosure, the control circuit is arranged in the functional safety control unit or is implemented as a peripheral circuit of the functional safety control unit.

Embodiments of the present disclosure provide a control system for a limp-home function of a vehicle, including: a functional safety control unit, configured to monitor an operating status of a microcontroller unit of the vehicle and, in the case of detecting an abnormality in the operating status, output a fault output signal for instructing execution of the limp-home function; the control circuit according to embodiments of the present disclosure; a load capable of executing the limp-home function; and a load control circuit configured for circuit control between the microcontroller and the control circuit and the load, wherein the control circuit receives the fault output signal and outputs a drive signal, so as to drive the load in combination with the load control circuit.

Embodiments of the present disclosure provide a domain controller, including the above-described control circuit according to embodiments of the present disclosure. The above-described control circuit is suitable for being integrated into a domain controller. Refer to the above description of the control circuit for the features of the domain controller according to embodiments of the present disclosure; they will not be described again here for brevity.

Embodiments of the present disclosure provide a motor vehicle, including the above-described control circuit according to embodiments of the present disclosure and/or the above-described domain controller according to embodiments of the present disclosure. Likewise, they will not described again here for brevity. Embodiments of the present disclosure provide a control method for a limp-home function of a vehicle, including:
- receiving a fault output signal for instructing execution of the limp-home function;
- providing a power supply signal in a manner of delaying a predetermined time period, such that the fault output signal is masked within the predetermined time period, thereby making it impossible to drive, within the predetermined time period, a load of the vehicle capable of executing the limp-home function,
wherein the predetermined time period is determined based on response parameters of a microcontroller unit and a functional safety control unit of the vehicle during the start-up process of the vehicle, the functional safety control unit being configured to monitor the operating status of the microcontroller unit and, in the case of detecting an abnormality in the operating status, output the fault output signal.

According to embodiments of the present disclosure, the response parameters are initialization completion time, and the predetermined time period is determined based on the difference between the initialization completion time of the microcontroller unit and the initialization completion time of the functional safety control unit.

According to embodiments of the present disclosure, the predetermined time period is between 100 ms and 200 ms, or other time lengths.

According to embodiments of the present disclosure, the providing the power supply signal in the manner of delaying the predetermined time period includes: controlling, through a switch circuit, a power supply used to provide the power supply signal, such that the power supply signal is output to the drive module with a delay of the predetermined time period, thereby causing the drive module to be unable to drive the load within the predetermined time period.

Embodiments of the present disclosure provide a computer-readable storage medium on which computer-executable instructions are stored, the instructions being used to, when executed by a processor, implement the method according to embodiments of the present disclosure.

Embodiments of the present disclosure provide a computer program product or a computer program, the computer program product or the computer program including computer instructions, the computer instructions being stored in a computer-readable storage medium. A processor of a computer device reads the computer instructions from the computer-readable storage medium, and the processor executes the computer instructions, such that the computer device performs the method according to embodiments of the present disclosure.

### Description of the drawings

To more clearly illustrate the technical solutions of embodiments of the present disclosure, the drawings needed to be used in the description of the embodiments will be briefly introduced below. Obviously, the drawings in the following description are merely some exemplary embodiments of the present disclosure, and for a person of ordinary skill in the art, other drawings can also be obtained based on these drawings without creative effort.
FIG. 1 shows a schematic diagram of a control circuit for a limp-home function of a vehicle according to an embodiment of the present disclosure;
FIG. 2 exemplarily shows a schematic diagram of a drive module used for the control circuit of FIG. 1;
FIG. 3 exemplarily shows a schematic diagram of a power supply module used for the control circuit of FIG. 1;
FIG. 4 shows a schematic diagram of a control system for the limp-home function of a vehicle according to an embodiment of the present disclosure;
FIG. 5 shows a schematic flowchart of a control method for the limp-home function of a vehicle according to an embodiment of the present disclosure;
FIG. 6 shows a schematic diagram of a computer-readable storage medium according to an embodiment of the present disclosure.

### Specific embodiments

To make the objectives, technical solutions, and advantages of the present disclosure more apparent, exemplary embodiments according to the present disclosure will be described in detail below with reference to the drawings. Obviously, the described embodiments are only some embodiments of the present disclosure, rather than all embodiments of the present disclosure, and it should be understood that the present disclosure is not limited by the exemplary embodiments described herein.

In the present specification and the drawings, steps and elements that are substantially the same or similar are denoted by the same or similar reference numerals, and repeated descriptions of these steps and elements will be omitted. In addition, in the description of the present disclosure, terms such as "first" and "second" are only used for distinguishing the description, and cannot be understood as indicating or implying relative importance or order.

Unless otherwise defined, all technical and scientific terms used herein have the same meanings as those commonly understood by a person skilled in the technical field of the present disclosure. The terms used herein are only for the purpose of describing embodiments of the present invention, and are not intended to limit the present invention.

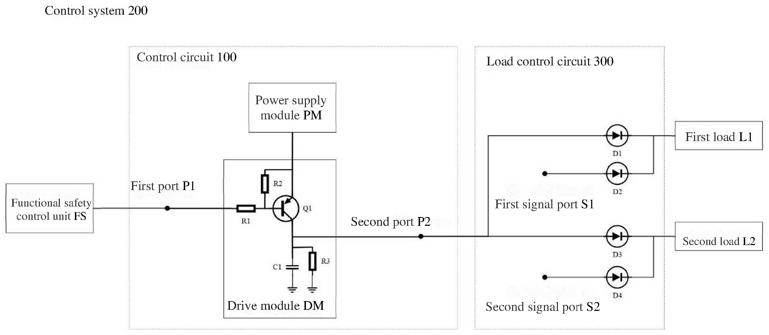

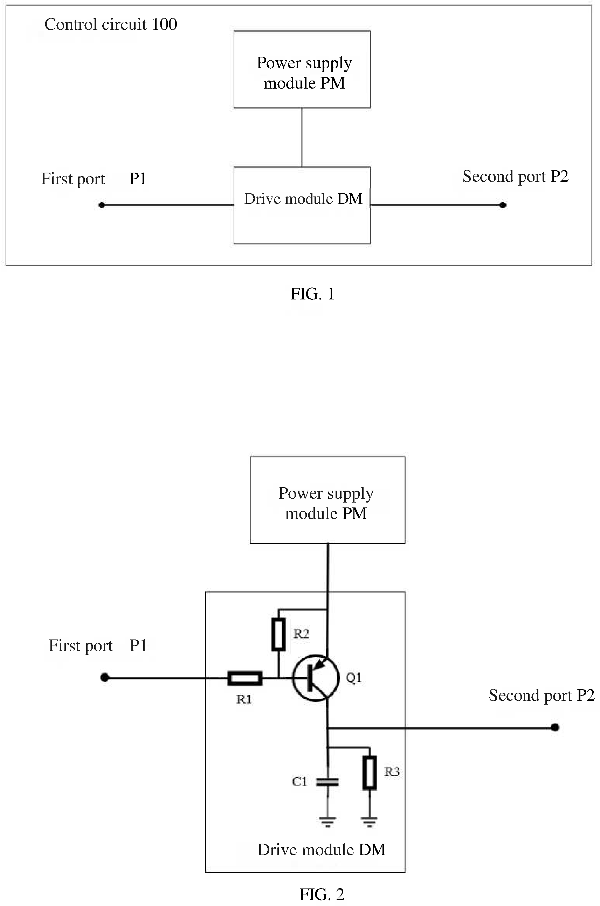

FIG. 1 shows a schematic diagram of a control circuit 100 for a limp-home function of a vehicle according to an embodiment of the present disclosure.

As shown in FIG. 1, the control circuit 100 includes:
- a first port P1, configured to receive a fault output signal, the fault output signal instructing execution of the limp-home function;
- a drive module DM, configured to drive a load of the vehicle capable of executing the limp-home function;
- a power supply module PM, configured to provide a power supply signal to the drive module;
- a second port P2, configured to output a drive signal for driving the load.

The drive module DM has a first input terminal connected to the power supply module PM, a second input terminal connected to the first port P1, and an output terminal connected to the second port P2.

When the vehicle starts, the functional safety control unit and the microcontroller unit of the vehicle are powered on in sequence and are initialized. The functional safety control unit is configured to monitor the operating status of the microcontroller unit and, in the case of detecting an abnormality in the operating status, output a fault output signal. The functional safety control unit, for example, can be a system basis chip or include a system basis chip.

For example, in a case where the functional safety control unit is implemented as a system basis chip, on one hand, the microcontroller unit relies on the system basis chip to provide power, such that the power-on time of the microcontroller unit is later than that of the system basis chip, and on the other hand, the microcontroller unit is more complex than the system basis chip and requires a longer time to initialize. Therefore, the initialization completion time of the functional safety control unit and the initialization completion time of the microcontroller unit are different from each other. More precisely, the initialization completion time of the microcontroller unit is later than the initialization completion time of the functional safety control unit.

The functional safety control unit, for example, monitors the operating status of the microcontroller unit by means of a built-in watchdog unit. In a normal operating status, the microcontroller unit periodically outputs a watchdog feed signal to the functional safety control unit or the watchdog unit. When the watchdog unit does not receive the watchdog feed signal within a predetermined time window, the microcontroller unit is considered abnormal and a fault output signal is output to instruct the vehicle to enter the limp-home mode and instruct the related loads to execute the limp-home function.

Loads capable of executing the limp-home function are, for example, functional safety-related loads, such as vehicle lights, wipers, and the like. In normal operation of the vehicle, activation of the loads is controlled by the microcontroller. After entering the limp-home mode, the loads can still be activated by the functional safety control unit to execute the limp-home function, such that the vehicle will not face the problem of being unable to activate safetycritical loads due to a failure of the microcontroller, thus greatly improving driving safety of the vehicle.

However, as described above, within a time period in which initialization of the functional safety control unit is completed while initialization of the microcontroller unit is not yet completed, the watchdog feed signal cannot be output by the microcontroller unit and received by the functional safety control unit, such that the functional safety control unit outputs the fault output signal.

In a case where the functional safety control unit outputs the fault output signal, the first port P1 of the control circuit 100 receives the fault output signal and transmits it to the drive module DM.

A power supply signal is provided through the power supply module PM connected to the drive module DM, thereby providing a drive current and/or drive voltage for the drive module.

In a case where the fault output signal is received and a power supply signal is provided, the drive module DM outputs a drive signal and transmits it through the second port P2 to a subsequent circuit including the load, thereby driving the load to execute the limp-home function, or activating the load.

Since a fault output signal that is generated because the microcontroller unit has not completed initialization does not mean that the microcontroller unit actually fails, and it is not desired that the fault output signal causes short-term abnormal activation of the load during the vehicle start-up process, according to embodiments of the present disclosure, a power supply signal is not provided within a predetermined time period after the vehicle starts, or a power supply signal is provided in a manner of delaying a predetermined time period, such that the fault output signal that is generated within the predetermined time period is masked, thereby causing the drive module DM not to output a drive signal capable of activating the load within the predetermined time period.

According to embodiments of the present disclosure, the predetermined time period is determined based on response parameters of the microcontroller unit and the functional safety control unit of the vehicle during a start-up process of the vehicle.

Preferably, the response parameters are initialization completion time, and the predetermined time period is determined based on the difference between the initialization completion time of the microcontroller unit and the initialization completion time of the functional safety control unit. For example, when the initialization completion time of the microcontroller unit is 220 ms and the initialization completion time of the functional safety control unit is 100 ms, the predetermined time period is 120 ms. Preferably, the predetermined time period is between 100 ms and 200 ms, or other time lengths.

By providing the power supply signal in a manner of delaying the predetermined time period, even if the drive module DM receives the fault output signal from the functional safety control unit, it does not output a drive signal capable of activating the load, thereby avoiding abnormal activation of the load.

During operation of the vehicle, in a case where the microcontroller unit has a failure, the functional safety control unit continuously outputs the fault output signal, resulting in long-term activation of the load. The continuously outputting the fault output signal, for example, includes outputting the fault output signal for a period of time longer than the predetermined time period. According to embodiments of the present disclosure, in this case, the power supply module can be manually disabled, such that the power supply signal is no longer provided, thereby no longer activating the load, or implementing deactivation of the load.

Manual disabling, for example, includes manually disabling by means of a switching device in a hardware or software form in the power supply module. Hardware control or software control in the power supply module is not affected by a microcontroller failure, effectively solving the problem that, in a case where the microcontroller has a failure, the limp-home mode can only be exited at a repair shop. For example, in a case where the power supply module has a physical switch in a hardware form, the physical switch can be directly manually turned off, thereby cutting off the power supply signal in a simple manner.

According to embodiments of the present disclosure, the power supply module can be controlled in a hardware and/or software manner. Alternatively, the power supply module has a power supply and a switching device, and the switching device can be controlled in a hardware and/or software manner.

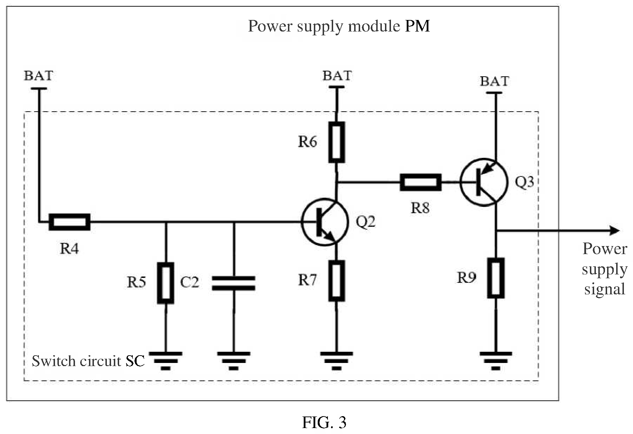

In the case of control in a hardware manner, the function of the power supply module can be implemented, for example, by means of a technical solution of a power supply combined with a switch circuit as shown in FIG. 3. In the case of control in a software manner, for example, the function of the power supply module can be implemented by means of a technical solution of inputting a controllable delay signal through an I/O port.

FIG. 2 exemplarily shows a schematic diagram of a drive module used for the control circuit of FIG. 1.

As shown in FIG. 2, the drive module DM, for example, can include a transistor Q1, a resistor R1, a resistor R2, and a capacitor C1.

The transistor Q1, for example, can be a PNP transistor. The emitter of the transistor Q1 is connected to the power supply module PM, the base is connected to the first port P1 through a circuit connected with a resistor R1, the collector is connected to the second port P2 and is grounded through a circuit connected with the capacitor C1, and the capacitor C1 is connected in parallel with a resistor R3. The resistor R1, the resistor R2, the resistor R3, and the capacitor C1 respectively play roles in the circuit design such as protecting the transistor, improving cutoff reliability of the transistor, limiting the level, and voltage stabilization.

In this example, the power supply signal is, for example, a high level, and the fault output signal is, for example, a low level. When the drive module DM receives the low-level fault output signal and is provided with the high-level power supply signal, the transistor Q1 is turned on and outputs a high level as a drive signal capable of activating the load. When the drive module DM does not receive the fault output signal or the power supply signal, the transistor Q1 is cut off.

According to embodiments of the present disclosure, the drive module DM outputs the drive signal based on the fault output signal and the power supply signal, and in addition to the drive module shown in FIG. 2, other design solutions capable of implementing this also fall within the scope of the present disclosure. For example, the drive module DM can include a field-effect transistor, such as a MOS transistor, and the like.

FIG. 3 exemplarily shows a schematic diagram of a power supply module PM used for the control circuit of FIG. 1.

As shown in FIG. 3, the power supply module PM, for example, can include a power supply BAT in a battery form and a switch circuit SC capable of implementing a delay function. The switch circuit SC, for example, can be implemented through a resistor-capacitor circuit (an RC circuit).

In this example, the switch circuit SC includes resistors R4, R5, R6, R7, R8, and R9, a capacitor C2, and transistors Q2 and Q3. The base of the transistor Q2 is connected to the resistor R4 connected to the power supply BAT, the resistor R5 that is grounded, and the capacitor C2 that is grounded, and the emitter is connected to the resistor R7 that is grounded, the emitter is connected to the resistor R6 connected to the power supply BAT and to one end of the resistor R8, the other end of the resistor R8 is connected to the base of the transistor Q3, the emitter of the transistor Q3 is connected to the power supply BAT, and the collector is connected to the resistor R9 that is grounded and outputs the power supply signal.

The power supply BAT charges the capacitor C2 via the resistor R4 and provides the power supply signal for the transistors Q2 and Q3. The voltage at one end where the capacitor C2 is connected to the base of the transistor Q2 increases from 0, and for subsequent circuits, the time t for it to increase to an effective voltage required by the subsequent circuits can be considered as a delay time. The delay time can be adjusted by adjusting the parameters of the resistor R4, the resistor R5, and the capacitor C2. When the base voltage of the transistor Q2 satisfies the turn-on condition, the transistor Q2 is turned on and outputs a level signal, the transistor Q3 is used to implement a reliable switching function in a similar manner, and other resistors, in the circuit design, play roles such as protecting the transistor, improving cutoff reliability of the transistor, and limiting the level. The power supply module PM outputs the power supply signal after the delay time t.

According to embodiments of the present disclosure, the power supply module can be controlled in a hardware and/or software manner to perform a delay function and a manual disabling function, and in addition to the power supply module shown in FIG. 3, other design solutions capable of implementing this also fall within the scope of the present disclosure.

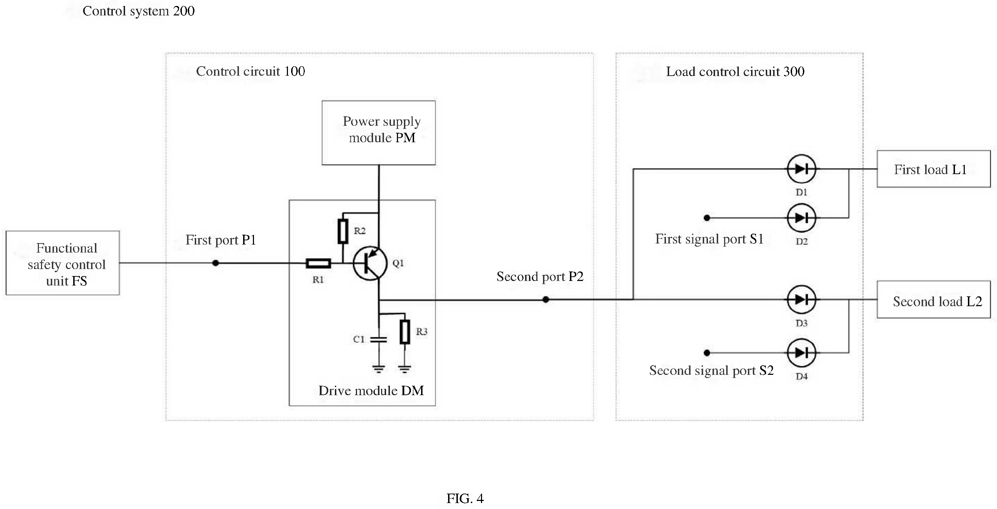

FIG. 4 shows a schematic diagram of a control system 200 for a limp-home function of a vehicle according to an embodiment of the present disclosure.

As shown in FIG. 4, the control system 200 includes a functional safety control unit FS, a control circuit 100 according to an embodiment of the present disclosure (here, the embodiment according to FIG. 2), loads capable of executing the limp-home function, and a load control circuit 300.

The functional safety control unit FS is configured to monitor the operating status of the microcontroller unit of the vehicle and, in the case of detecting an abnormality in the operating status, output a fault output signal for instructing execution of the limp-home function. The functional safety control unit FS, for example, is a system basis chip or includes a system basis chip.

Two loads, that is, a first load L1 and a second load L2, are exemplarily shown as loads capable of executing the limp-home function.

The load control circuit 300 is configured for circuit control between the microcontroller and the control circuit and the loads, and for example can include a first signal port S1 and a second signal port S2 connected to the microcontroller and diodes D1-D4 connected upstream of the loads. A user can adopt a modified solution of the load control circuit as needed.

As can be seen from the figure, in the load control circuit 300, the load can not only be driven by the drive signal output by the control circuit 100, but can also be activated by a control signal from the microcontroller received by means of the first signal port S1 and the second signal port S2. Therefore, in a normal operating status of the microcontroller, the loads can be directly activated, and in an abnormal operating status of the microcontroller, the loads can be activated by means of the control circuit 100 for the limp-home function of the vehicle according to the present disclosure. By using the control system for the limp-home function of the vehicle according to embodiments of the present disclosure, driving of the loads by combining the control circuit and the load control circuit is implemented.

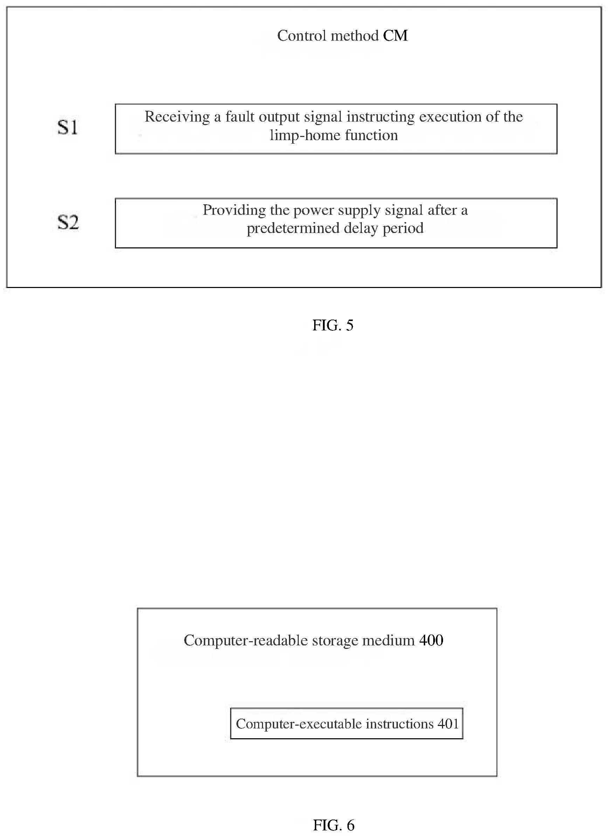

FIG. 5 shows a schematic flowchart of a control method for a limp-home function of a vehicle according to embodiments of the present disclosure.

As shown in FIG. 5, in step S1, for example, a fault output signal for instructing execution of the limp-home function is received from the functional safety control unit. In step S2, for example, after the vehicle starts, a power supply signal is provided in a manner of delaying a predetermined time period, such that the fault output signal is masked within the predetermined time period, thereby making it impossible to drive, within the predetermined time period, the loads of the vehicle capable of executing the limp-home function. It should be understood that the order of occurrence of steps S1 and S2 is not limited.

For example, the predetermined time period can be determined based on response parameters of a microcontroller unit and a functional safety control unit of the vehicle during a start-up process of the vehicle. The response parameters, for example, can be initialization completion time, such that the predetermined time period is determined based on a difference between the initialization completion time of the microcontroller unit and the initialization completion time of the functional safety control unit, and the predetermined time period is, for example, between 100 ms and 200 ms, or other time lengths.

The providing the power supply signal in the manner of delaying the predetermined time period, for example, can include: controlling, for example, a power supply used to provide the power supply signal through a switch circuit as shown in FIG. 3, such that the power supply signal is output to the drive module with a delay of the predetermined time period.

FIG. 6 shows a schematic diagram of a computer-readable storage medium 400 according to embodiments of the present disclosure.

As shown in FIG. 6, computer-readable instructions 401 are stored on the computer storage medium 400. When the computer-readable instructions 401 are run by a processor, the method according to embodiments of the present disclosure described above can be performed. The computer-readable storage medium in embodiments of the present disclosure can be a volatile memory or a non-volatile memory, or can include both a volatile memory and a non-volatile memory. The non-volatile memory can be a read-only memory (ROM), a programmable read-only memory (PROM), an erasable programmable read-only memory (EPROM), an electrically erasable programmable read-only memory (EEPROM), or a flash memory. The volatile memory can be a random-access memory (RAM), which is used as an external cache. By way of example but not limitation, many forms of RAM are available, such as a static random-access memory (SRAM), a dynamic random-access memory (DRAM), a synchronous dynamic random-access memory (SDRAM), a double data rate synchronous dynamic random-access memory (DDRSDRAM), an enhanced synchronous dynamic random-access memory (ESDRAM), a synchronous link dynamic random-access memory (SLDRAM), and a direct rambus random-access memory (DR RAM). It should be noted that the memory of the method described herein is intended to include, but is not limited to, these and any other suitable types of memory. It should be noted that the memory of the method described herein is intended to include, but is not limited to, these and any other suitable types of memory.

It should be explained that the flowcharts and block diagrams in the drawings illustrate possible implementations of architectures, functions, and operations of systems, methods, and computer program products according to various embodiments of the present disclosure. In this regard, each block in the flowchart or block diagram can represent a module, a program segment, or a part of code, the module, the program segment, or the part of code containing at least one executable instruction for implementing a specified logical function. It should also be noted that, in some alternative implementations, the functions noted in the blocks can also occur in an order different from the order noted in the drawings. For example, two blocks shown in succession can actually be executed substantially in parallel, and sometimes they can also be executed in an inverse order, depending on the functions involved. It should also be noted that each block in the block diagram and/or flowchart, and combinations of blocks in the block diagram and/or flowchart, can be implemented by a special-purpose hardware-based system that performs the specified functions or operations, or can be implemented by a combination of special-purpose hardware and computer instructions.

In general, various exemplary embodiments of the present disclosure can be implemented in hardware or special-purpose circuits, software, firmware, logic, or any combination thereof. Some aspects can be implemented in hardware, while other aspects can be implemented in firmware or software that can be executed by a controller, a microprocessor, or other computing equipment. When aspects of embodiments of the present disclosure are illustrated or described as block diagrams, flowcharts, or by using certain other graphical representations, it will be understood that the blocks, apparatuses, systems, techniques, or methods described herein can, as non-limiting examples, be implemented in hardware, software, firmware, special-purpose circuits or logic, general-purpose hardware, or a controller or other computing equipment, or some combination thereof.

The exemplary embodiments of the present disclosure described in detail above are merely illustrative and not limiting. A person skilled in the art should understand that, without departing from the principles and spirit of the present disclosure, various modifications and combinations can be made to these embodiments or features thereof, and such modifications should fall within the scope of the present disclosure.

## Claims

1. A control circuit for a limp-home function of a vehicle, including:
- a first port, configured to receive a fault output signal, the fault output signal instructing execution of the limp-home function;
- a drive module, configured to drive a load of the vehicle capable of executing the limp-home function;
- a power supply module, configured to provide a power supply signal to the drive module;
- a second port, configured to output a drive signal for driving the load,
wherein the drive module has a first input terminal that is connected to the power supply module, a second input terminal that is connected to the first port, and an output terminal that is connected to the second port, and
wherein the power supply module is configured to provide the power supply signal in a manner of delaying a predetermined time period, such that the fault output signal is masked within the predetermined time period, thereby causing the control circuit to be unable to drive the load within the predetermined time period, and
wherein the predetermined time period is determined based on response parameters of a microcontroller unit and a functional safety control unit of the vehicle during a start-up process of the vehicle, the functional safety control unit being configured to monitor an operating status of the microcontroller unit and, in a case of detecting an abnormality in the operating status, output the fault output signal.

2. The control circuit according to claim 1, wherein
the response parameters are initialization completion time, and the predetermined time period is determined based on a difference between the initialization completion time of the microcontroller unit and the initialization completion time of the functional safety control unit.

3. The control circuit according to claim 1 or 2, wherein
the predetermined time period is between 100 ms and 200 ms.

4. The control circuit according to claim 1 or 2, wherein
in a case where the drive module continuously receives the fault output signal, the power supply module can be manually disabled, wherein the continuously receiving the fault output signal includes receiving the fault output signal for a period of time longer than the predetermined time period.

5. The control circuit according to claim 1 or 2, wherein
the power supply module can be controlled in a hardware and/or software manner.

6. The control circuit according to claim 5, wherein
the power supply module has a power supply and a switching device, and the switching device can be controlled in a hardware and/or software manner.

7. The control circuit according to claim 4, wherein
the power supply module being capable of being manually disabled includes being manually disabled by means of a switching device in a hardware or software form in the power supply module.

8. The control circuit according to claim 1, wherein
the drive module includes a transistor and/or a field-effect transistor.

9. The control circuit according to claim 1 or 2, wherein
the control circuit is arranged in the functional safety control unit or is implemented as a peripheral circuit of the functional safety control unit.

10. A control system for a limp-home function of a vehicle, including:
a functional safety control unit, configured to monitor an operating status of a microcontroller unit of the vehicle and, in the case of detecting an abnormality in the operating status, output a fault output signal for instructing execution of the limp-home function;
the control circuit according to any one of claims 1 to 9;
a load capable of executing the limp-home function; and
a load control circuit, configured for circuit control between the microcontroller and the control circuit and the load,
wherein the control circuit receives the fault output signal and outputs a drive signal, so as to drive the load in combination with the load control circuit.

11. A domain controller, including the control circuit according to any one of claims 1 to 9.

12. A motor vehicle, including the control circuit according to any one of claims 1 to 9 and/or the domain controller according to claim 11.

13. A control method for a limp-home function of a vehicle, including:
- receiving a fault output signal for instructing execution of the limp-home function;
- providing a power supply signal in a manner of delaying a predetermined time period, such that the fault output signal is masked within the predetermined time period, thereby making it impossible to drive, within the predetermined time period, a load of the vehicle capable of executing the limp-home function,
wherein the predetermined time period is determined based on response parameters of a microcontroller unit and a functional safety control unit of the vehicle during a start-up process of the vehicle, the functional safety control unit being configured to monitor an operating status of the microcontroller unit and, in the case of detecting an abnormality in the operating status, output the fault output signal.

14. The control method according to claim 13, wherein
the response parameters are initialization completion time, and the predetermined time period is determined based on a difference between the initialization completion time of the microcontroller unit and the initialization completion time of the functional safety control unit.

15. The control method according to claim 13 or 14, wherein
the predetermined time period is between 100 ms and 200 ms.

16. The control method according to claim 13 or 14, wherein the providing the power supply signal in the manner of delaying the predetermined time period includes:
controlling, through a switch circuit, a power supply used to provide the power supply signal, such that the power supply signal is output to a drive module with a delay of the predetermined time period, thereby causing the drive module to be unable to drive the load within the predetermined time period.

17. A computer-readable storage medium on which computer-executable instructions are stored, the instructions being used to, when executed by a processor, implement the method according to any one of claims 13-16.
